# EUROPEAN PATENT APPLICATION

(11) **EP 4 729 884 A1**
(43) Date of publication of application: **22.04.2026**
(21) Application number: 25184074.0
(22) Date of filing: 19.06.2025
(51) Int. Cl.: G01B 11/16

(54) **SYSTEM AND METHOD FOR CONSTRUCTING STENCILS-BASED SPECKLE PATTERNS**

(30) Priority: 18.10.2024 US 202463709010 P
(71) Applicant: PRATT & WHITNEY CANADA CORP., Longueuil, Québec J4G 1A1 (CA)
(72) Inventor: GARGANO, Tim, (01BE5) Longueuil, J4G 1A1 (CA); TOMES, Nathan, (01BE5) Longueuil, J4G 1A1 (CA)
(74) Representative: Dehns

(57) **Abstract**

A computer-readable model (200) of a target speckle pattern (118) is constructed with computer-stimulated digital image correlation (DIC) unit that includes a camera (112) and a three-dimensional object model (116). The three-dimensional object model (116) is positioned within a view frustum (210) of the camera (112) and facing the camera (112). A nominal speckle pattern (114) is generated based on the parameters of the camera (112). The camera (112) projects the nominal speckle pattern (114) onto the three-dimensional object model (116) so that a target speckle pattern (118) can be constructed. The target speckle pattern (118) is then saved in a non-transitory computer-readable memory of the computer-readable model (200). The computer-readable model (200) may be executed by a controller of a manufacturing system, such as a CNC machining system or a 3D printing system, to manufacture a stencil to be used in performing digital image correlation (DIC) analyses of object(s).

## Description

### FIELD

The invention relates to a stencil for constructing speckle patterns on an object for a DIC (digital image correlation) application, and in particularly, to systems and methods for constructing a stencil with a speckle patterns suitable for the DIC application.

### BACKGROUND

Digital image correlation (DIC) methods are used to analyze objects, such as with respect to deformation or strain. Such methods may use stencils. While existing methods of making stencils for use in DIC are suitable for their intended purposes, improvements are always desirable.

### SUMMARY

The present invention provides methods of constructing a computer-readable model of a stencil. The computer-readable model may be used to manufacture a stencil to be used in performing digital image correlation (DIC) analyses of object(s). For example, the computer-readable model may be executed by a controller of a manufacturing system, such as a CNC machining system or a 3D printing system, to manufacture instances of the stencil.

In one aspect, the invention provides a method of constructing a computer-readable model of a target speckle pattern to be used in manufacturing a stencil to be applied to an object (e.g., for replicating the target speckle pattern on the object) for a digital image correlation (DIC) analysis using a camera (e.g., a DIC camera or image sensor). The method includes defining a position of the camera to be used for the DIC analysis relative to a three-dimensional model of the object, determining a view frustum of the camera based on the position of the camera such that a surface-to-be-analyzed of the three-dimensional model of the object is positioned within the view frustum and facing the position of the camera, receiving a nominal speckle pattern defined for the DIC analysis based on a capture resolution of the camera, positioning the nominal speckle pattern within the view frustum on a plane (a first plane) that is normal to a construction line passing through the view frustum such that the view frustum is symmetrical in two degrees of freedom relative to the construction line, projecting the nominal speckle pattern onto the surface-to-be-analyzed of the three-dimensional model of the object and thereby generating a target speckle pattern, and saving the target speckle pattern into a non-transitory computer memory of a computer-readable model of the target speckle pattern, the computer-readable model configured to be used in manufacturing the stencil to be applied to the object for the DIC analysis using the camera (e.g., the stencil may be used to apply the target speckle pattern to the object for the DIC analysis using the camera).

In any of the aspects or embodiments described above and herein, the method may further include positioning the three-dimensional model of the object between a near clipping plane of the view frustum and a far clipping plane of the view frustum. The plane (the first plane) may be between the near clipping plane of the view frustum and the far clipping plane of the view frustum.

In any of the aspects or embodiments described above and herein, the method may further include unwrapping the target speckle pattern into a plane (a second or unwrapping plane) that is different from the plane (the first plane) that is normal to the construction line passing through the view frustum, and then, optionally, defining a thickness of the stencil with the target speckle pattern.

In any of the aspects or embodiments described above and herein, the method may further include defining a thickness of the stencil with the target speckle pattern.

In any of the aspects or embodiments described above and herein, the determining a view frustum of the camera may be further based on a characteristic of the camera. The characteristic of the camera may include at least one of a size of an image-capture sensor of the camera, a focal length of a lens of the camera through which light passes before the light is captured by the image-capture sensor, and a distance between the position of the camera and a point on the surface-to-be-analyzed of the three-dimensional model of the object.

In any of the aspects or embodiments described above and herein, the (steps of) defining the position, determining the view frustum, receiving the nominal speckle pattern, positioning the nominal speckle pattern, and/or projecting the nominal speckle pattern may be performed on a computer in a digital space.

Another aspect of the invention provides a method of manufacturing a stencil which may comprise, at a controller, reading a target speckle pattern (e.g., a target speckle pattern constructed according to a method of any of the aspects or embodiments described above and herein), and, at the controller, executing a manufacturing process to manufacture the stencil based on the target speckle pattern.

In any of the aspects or embodiments described above and herein, the manufacturing process may include at least one of additive manufacturing and CNC machining.

Another aspect of the invention provides a method of manufacturing a digital image correlation stencil. The method includes receiving, at a controller of a machine operable to manufacture digital image correlation stencil, a computer-readable model of a target speckle pattern (e.g., a target speckle pattern constructed according to a method of any of the aspects or embodiments described above and herein), and causing the controller to operate the machine to manufacture the digital image correlation stencil based on the target speckle pattern in the computer-readable model.

In any of the aspects or embodiments described above and herein, the machine may include one of: a computer numerical control (CNC) machine, and a three-dimensional printer (an additive manufacturing machine).

In any of the aspects or embodiments described above and herein, the CNC machine may manufacture the digital image correlation stencil by cutting the digital image correlation stencil out of a sticker.

In any of the aspects or embodiments described above and herein, the method may include causing the controller to operate the CNC machine to manufacture the digital image correlation stencil.

In any of the aspects or embodiments described above and herein, causing the controller to operate the CNC machine to manufacture the digital image correlation stencil may include causing the CNC machine to cut the digital image correlation stencil out of a sticker.

In any of the aspects or embodiments described above and herein, the sticker may be a vinyl sticker.

In any of the aspects or embodiments described above and herein, the method may include causing the controller to operate the three-dimensional printer.

In any of the aspects or embodiments described above and herein, causing the controller to operate the three-dimensional printer may include causing the three-dimensional printer to print the digital image correlation stencil.

In any of the aspects or embodiments described above and herein, the three-dimensional printer may print (additively manufacture) the digital image correlation stencil in a shape that at least substantially conforms to the surface-to-be-analyzed of the object.

Another aspect of the invention provides a method of performing a digital image correlation (DIC) analysis of an object using a camera. The method includes positioning the camera relative to the object such that a surface of the object faces the camera and is both: a) within a view frustum of the camera, and b) between a near clipping plane of the view frustum and a far clipping plane of the view frustum.

Another aspect of the invention provides a non-transitory computer-readable storage medium having computer-readable instructions stored thereon, which when executed by a computer causes the computer to perform a stencil generating procedure. The procedure includes generating a nominal speckle pattern based on a capture resolution of a camera to be used in a digital image correlation (DIC) analysis of an object, wherein a surface of the object is speckled using the stencil, projecting the nominal speckle pattern onto a model of the surface of the object to obtain a projected speckle pattern in the model, and based on the projected speckle pattern, constructing a computer-readable model to be used to manufacture the stencil.

In any of the aspects or embodiments described above and herein, the computer-readable instructions may include conversion instructions that, when executed by the computer cause the computer to convert the computer-readable model into instructions executable by a manufacturing machine to manufacture the stencil.

In any of the aspects or embodiments described above and herein, the machine used in manufacturing the stencil may include a computer numerical control (CNC) machine, and/or a three-dimensional printer (an additive manufacturing machine).

In any of the aspects or embodiments described above and herein, the stencil may comprise a thermoplastic material.

The foregoing features and elements will become more apparent in light of the following description and the accompanying drawings. It should be understood, however, that the following description and drawings are intended to be exemplary in nature and non-limiting.

### BRIEF DESCRIPTION OF FIGURES

The present technology is illustrated with the help of figures appended hereto, in which:
Figure 1 illustrates a diagram of a computer-stimulated digital image correction (DIC) system 100 for generating a computer-readable model of target speckle patterns in accordance with the disclosed embodiments.
Figure 2 illustrates an exemplary computer-readable model of target speckle pattern in accordance with the disclosed embodiments.
Figure 3 depicts a flow chart 300 for generating a computer-readable model of target speckle pattern in accordance with the disclosed embodiments.
Figure 4 depicts a flowchart for manufacturing a stencil having the target speckle pattern based on the computer-readable model of target speckle pattern in accordance with the disclosed embodiments.
Figure 5 illustrates a schematic diagram showing a first unwrapping algorithm for generating a two-dimensional stencil in accordance with the disclosed embodiments.
Figure 6 illustrates a schematic diagram showing a second unwrapping algorithm for generating a two-dimensional stencil in accordance with the disclosed embodiments.
Figure 7 illustrates a flowchart for generating a target speckle pattern for a stencil to be applied to an object for the DIC analysis in accordance with the disclosed embodiments.
Figure 8 illustrates a flowchart for generating a stencil in accordance with the disclosed embodiments.

### DETAILED DESCRIPTION

Numerous specific details are set forth in order to provide a thorough understanding of the present technology. While the embodiments will be described in conjunction with the drawings, it will be understood that the following description is not intended to limit the present technology to any one embodiment. Alternatives, modifications, and equivalents will become apparent to the person of ordinary skill in the art upon reading this specification.

The present disclosure is directed to a system and a method of constructing speckle pattern stencils for an object, such as a part of an engine. In particular, the present disclosure is directed to a system and method for generating a computer-readable model of generating targeted speckle patterns. The present disclosure is further directed to a system and method for manufacturing targeted speckle patterns based on the computer-readable model. The speckle pattern stencils may be two-dimensional (2D) or three-dimensional (3D) printed speckle pattern stencils that are generated based on a shape and a structure of the object to be used in the DIC application. The disclosed embodiments in accordance with the disclosed embodiments further provides a speckle pattern stencil made based on a shape and a structure of an object to be monitored in a DIC application.

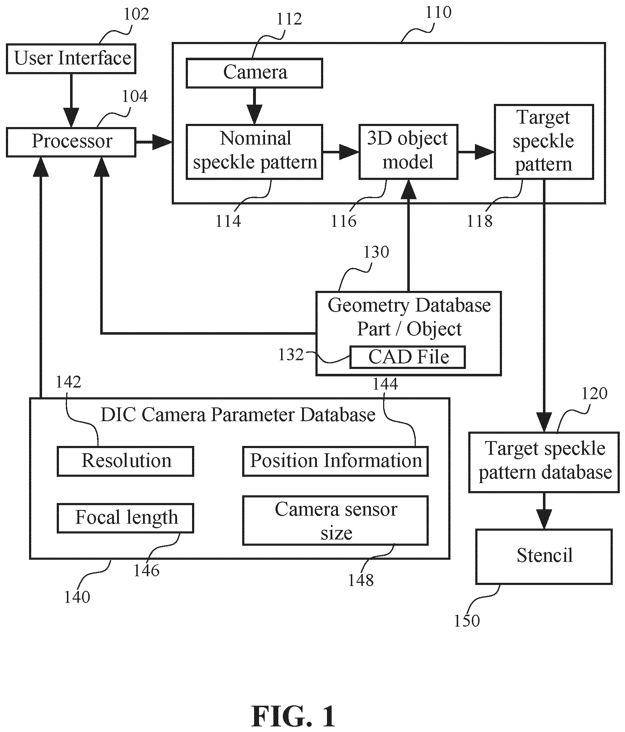

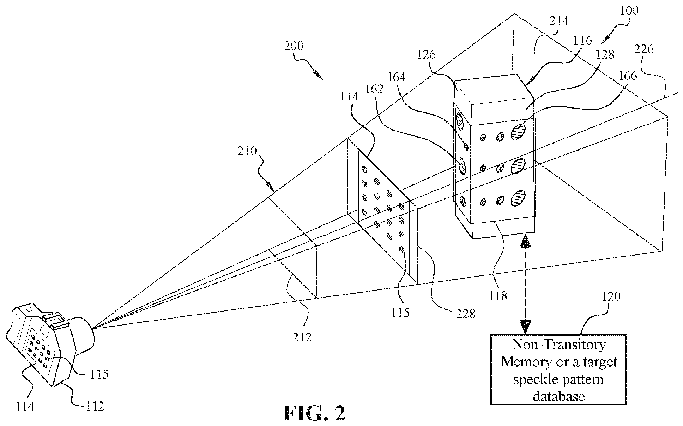

In accordance with the disclosed embodiments, the computer-readable model of target speckle patterns may be generated with a computer-stimulated digital image correction (DIC) system 100, as illustrated in Figure 1. Computer-stimulated DIC system 100 includes a user interface 102 for receiving data, a processor 104 for processing the data to generate control instructions, and a computer-stimulated DIC device 110 that generates a target speckle pattern according to the control instructions received from processor 104. System 100 further includes a target speckle pattern database 120 for storing the target speckle pattern generated from the computer-stimulated DIC unit 106, a part/object geometry database 130 for storing geometrical features of parts or objects and CAD (Computer Aided Design) files of the parts and objects, and a camera parameter database 140 for storing camera characteristics. Target speckle pattern database 120 may be a non-transitory memory of a computer-readable model (shown in Figure 2) of the target speckle pattern that is used in manufacturing a stencil having the target speckle pattern.

Computer-stimulated DIC device 110 in accordance with the disclosed embodiments is a virtual or computer-readable DIC device that includes a camera or a DIC camera 112 for projecting a nominal speckle pattern 114 to surfaces of a three-dimensional (3D) object model 116 that are to be DIC-analyzed. The nominal speckle pattern 114 may be generated by processor 104 by referring characteristics of DIC camera 112 saved in the camera parameters database 140 and geometrical features of the three-dimensional object model 116 saved in the part/object geometry database 130. The part/object geometry database 130 stores geometry information of a plurality of parts or objects. The geometry information may include a plurality of CAD (computer aided design) files 132 of the plurality of parts or objects. The CAD files 132 stores three-dimensional models of a variety of objects or parts. The camera parameter database 140 stores camera parameters for different camera models, such as a capture resolution of a camera, position information of a camera used in DIC ("DIC camera") 144 such as a distance of the camera from the part or the object, lens focal length 146, and the camera sensor size 148, and so on. Based on data collected from part/object geometry database 130 and camera parameter database 406, the processor 104 generates a nominal speckle pattern that is desired to be shown in captured images of the camera 112 during a real-space DIC analysis. The nominal speckle pattern has a plurality of features or dots having uniform sizes and shapes.

In operation, a user selects, through the user interface 102, a CAD file, such as CAD file 132, corresponding to an object or a part that will undergo the DIC analysis. The user may also select a region of interest from the CAD file 132. The region of interest is a region that requires the DIC analysis and needs a speckle pattern to be formed thereon using a stencil. The region of interest may be a planar surface or a three-dimensional region. The selected region of interest is sent to processor 104 for processing.

Processor 104 then generates a nominal apparent speckle pattern 114 based on the selected region of interest and the position information of the DIC camera 144. The position information of the DIC camera is collected assuming that the camera 112 is positioned within a view frustum of the three-dimensional object model 116 generated from CAD file 132 and the three-dimensional object model 116 is positioned between a near clipping plane of the view frustum and a far clipping plane of the view frustum. Details of the view frustum will be described in Figure 2 later.

The nominal apparent speckle pattern 114 is an optimal speckle pattern that is shown on images captured by the camera 112 at the beginning of an DIC analysis process. That is, the captured image of the DIC camera should show the optimal speckle pattern including a plurality of uniform-size and uniform-shape dots or features 115, as shown in Figure 2. The size of each of the plurality of dots or feature depends on the capture resolution of the camera and may be 5 pixels, as an example.

The camera 112 then projects the nominal speckle pattern 114 onto one or more surface of the three-dimensional object model 116 that needs DIC analysis to obtain a target speckle pattern 118. The target speckle pattern 118 is then saved in the target speckle pattern database 220 of a computer-readable model of target speckle pattern of the disclosed embodiments. The target speckle pattern 118 will be used to manufacture a stencil 150 that can be applied on one of more surfaces of a real three-dimensional part or object for the DIC analysis. Based on a shape and a dimension of the one or more surfaces of the real three-dimensional part of object, the target speckle pattern 118 may include a plurality of features or dots having different sizes and shapes, such as those 162, 164, and 166 of Figure 2. This feature is to make sure that the images captured by a real camera in a real-space DIC apparatus have speckle patterns as close to the nominal speckle pattern 114 as possible to obtain a better correlation result.

Figure 2 illustrates an exemplary computer-readable model of target speckle pattern 200 in accordance with the disclosed embodiments. The computer-readable model 200 corresponds to the computer-stimulated DIC device 110 of Figure 1, but shows more details of the settings of the camera 112, the nominal speckle pattern 114, and the three-dimensional object model 116. To simplify, elements that have been shown in Figure 1 are marked with same reference numbers.

In the computer-readable model 200, the three-dimension object model 116 is positioned within a view frustum 210 of the camera 112 between a near clipping plane 212 of the view frustum 210 and a far clipping plane 214 of the view frustum 210 and one or more surfaces of the three-dimensional object model 116, i.e., surfaces 126 and 128, that are to be DIC analyzed facing the position of the camera 112. The nominal speckle pattern 114 is also positioned within the view frustum 210 on a plane 228 that is normal to a construction line 226 passing through the view frustum 210 such that the view frustum 210 is symmetrical in two degrees of freedom relative to the construction line 226. The plane 228 may be between the near clipping plane 212 of the view frustum 210 and the far clipping plane 214 of the view frustum 210.

With this setting, the camera 112 projects the nominal speckle pattern 114 onto surfaces 126 and 128 of the three-dimensional object model 116 to form the target speckle pattern 118 thereon. As shown in the figure, the nominal speckle pattern 114 has a plurality of dots 115 with a uniform size and shape. It is noted that, as the distances and angles of the surfaces 126 and 128 of the three-dimensional object model 116 from the camera 112 are different, after projecting the nominal speckle pattern 114 to the surfaces 126 and 128 of the three-dimensional object model 116, projected dots 162, 164, and 166 of the target speckle pattern 118 become non-uniformed in sizes and shapes.

After the target speckle pattern 118 is generated, the target speckle pattern 118 is saved into a non-transitory computer memory or target speckle pattern database 120 for later use in manufacturing a stencil to be applied on real surfaces of a real object that correspond to surfaces 126 and 128 of the three-dimensional object model 116.

In the exemplary embodiment of Figure 2, the nominal speckle pattern 114 is positioned between the camera 112 and the three-dimensional object model 116. However, the nominal speckle pattern 114 may be positioned on the other side of the three-dimensional object model 116, or on a location between the back of the view frustum 210 and the surfaces to be analyzed, or even beyond the surfaces to be analyzed.

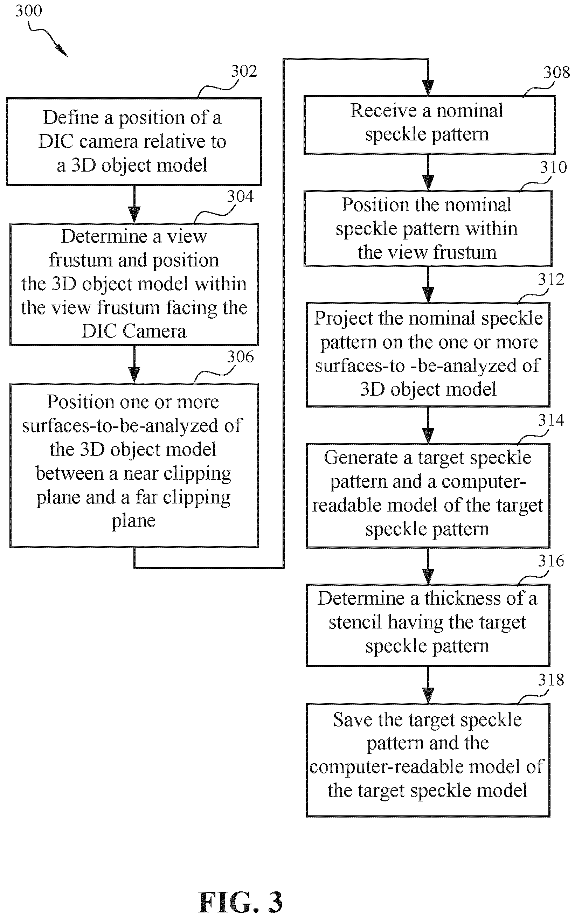

Figure 3 depicts a flow chart 300 showing a method for generating the computer-readable model 200 of target speckle pattern in accordance with the disclosed embodiments. The computer-readable model of target speckle pattern is generated in a virtual space, i.e., in a computer-stimulated DIC device, such as in the computer-stimulated DIC device 110 of Figure 1. According to the disclosed embodiments, the computer-readable model 200 of target speckle pattern, once generated, will be saved in a database, such as the target speckle pattern database 120 of Figure 1. The target speckle pattern database 120 may be a non-transitory computer-readable memory. Further, flowchart 300 may be performed on a virtual DIC system similar to the diagram of Figure 1, in which a DIC camera captures images of a three-dimensional model of an object to be DIC-analyzed instead of the real object. The three-dimensional model is generated based on a CAD file of the object.

Step 302 first executes by defining a position of a camera relative to a three-dimensional object model that needs an DIC analysis. Defining the position of the camera may be done based on the camera parameters stored in the camera parameter database 140.

Step 304 executes by determining a view frustum of the DIC camera based on the position of the DIC camera such that one or more surfaces-to-be-analyzed of the three-dimensional model of the object is positioned within the view frustum and facing the position of the camera. In accordance with the disclosed embodiments, determining the view frustum of the DIC camera is based on a characteristic of the camera that may include a size of an image-capture sensor of the DIC camera, and a focal length of a lens of the DIC camera through which a light passes before the light is captured by the image-capture sensor. The characteristic of the camera may also include a distance between the position of the camera and a point on the surface-to-be-analyzed of the three-dimensional model of the object.

The view frustum is a region of space in a modeled world that may appear on a screen. That is, it is a field of view of a perspective virtual camera system. The view frustum is typically obtained by taking a geometrical frustum that is a truncation with parallel planes of a pyramid of vision that a camera or eye would have to the rectangular viewpoints typically used in computer graphics. The exact shape of this region varies depending on what kind of camera lens is being simulated, but typically it is a frustum of a rectangular pyramid. In general, the view frustum of the camera has a near clipping plane and a far clipping plane. The near clipping plane and the far clipping plane are planes that cut the frustum perpendicular to the viewing direction.

Based the range of the view frustum of the camera, step 306 executes by positioning one or more faces of the three-dimensional object model that needs the DIC analysis between the near clipping plane and the far clipping plane of the view frustum of the camera. As described above, the three-dimensional object model may be generated from a CAD file of an actual object that are to be DIC-analyzed. The three-dimensional object model corresponds to a physical object or part. The CAD file is saved in the part/object geometry database 130.

Step 308 executes by receiving a nominal speckle pattern defined for the DIC analysis based on at least one parameter of the DIC camera saved in the camera parameters database 140. As an example, the nominal speckle pattern may be generated by processor 104 based on the resolution information 142 saved in the camera parameters database 140.

Next, step 310 executes by positioning the nominal speckle pattern within the view frustum of the camera on a plane that is normal to a construction line passing through the view frustum such that the view frustum is symmetrical in two degrees of freedom relative to the construction line. The plane may be the plane 218 and the construction line may be the construction line 226, shown in Figure 2. It is noted that the construction line 226 also passes through the three-dimensional object model so that the nominal speckle pattern can be projected onto the one or more surfaces of the three-dimensional object model properly.

Step 312 then executes by projecting the nominal speckle pattern onto the one or more surfaces-to-be-analyzed of the three-dimensional model of the object so that a target speckle pattern can be generated on the one or more surfaces.

Step 314 executes by generating a target speckle pattern that is computer-readable target speckle pattern. The target speckle pattern is a three-dimensional speckle pattern. This target speckle pattern will be the speckle pattern that will be appeared on a stencil used to apply on one or more surfaces of an actual object corresponding to the three-dimensional object model. As described above, the target speckle pattern includes a plurality of features or dots and the sizes and the shapes of the plurality of features or dots vary depending on their positions and distances from the DIC camera. This manner ensures that the sizes and shapes of the plurality of features of dots shown in an image captured by the DIC camera can be as uniform as possible. After the target speckle pattern is generated, the computer-readable model of the target speckle pattern is generated.

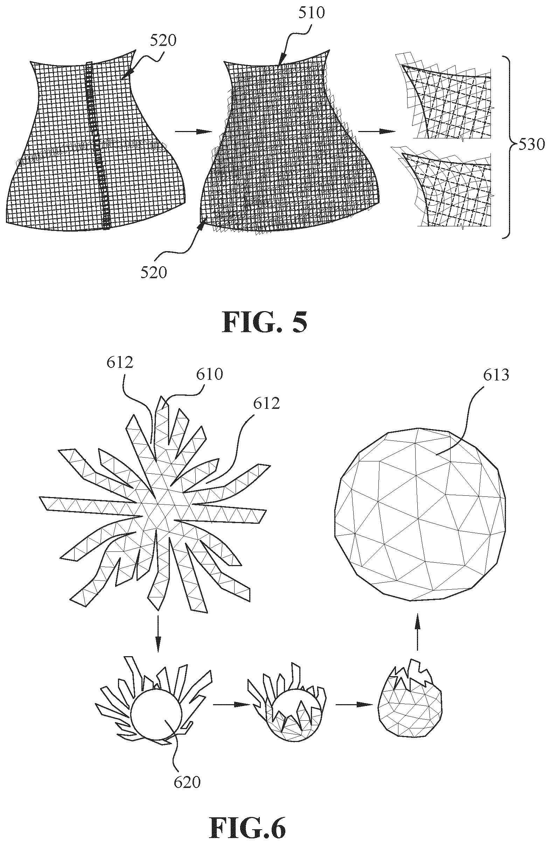

Last, step 316 executes by saving the generated target speckle pattern and the computer-readable model of the target speckle pattern in a non-transitory computer-readable memory, such as the target speckle pattern database 120. The computer-readable model of the target speckle pattern will be used in manufacturing a stencil having the target speckle pattern, which will be described in more details in the following Figure 6.

Optionally, flowchart 300 may also include step 318 for determining a thickness of a stencil having the target speckle pattern. There are some options on determining the thickness. One option is to unwrapping the target speckle pattern into a plane that is different from the plane that is normal to the construction line passing through the view frustum, and then defining a thickness of the target speckle pattern. Such unwrapping methods may include a Reverse Kinematic Draping method. In this method, by referring to Figure 5, step 314 may executes by virtually "draping" a uniform two-dimensional mesh 510 onto a doubly-curved surface 520, and reversing this draping process with the target speckle pattern obtained at step 312 to determine the thickness of the stencil with the target speckle pattern.

Other unwrapping methods may include using a computational origami method to determine the thickness of the stencil with the target speckle pattern. According to this method, by referring to Figure 6, step 314 may executes by generating a two-dimensional surface with gaps based on the target speckle pattern obtained at step 312. As shown in Figure 6, a two-dimensional surface 610 with gaps 612 is designed to be foldable to wrap on a three-dimensional doubly curve surface 620 of an object or part that needs the DIC analysis so as to obtain an object 630 wrapped with the two-dimensional surface 610. A virtual two-dimensional stencil, thus, will be generated and the thickness thereof will be determined.

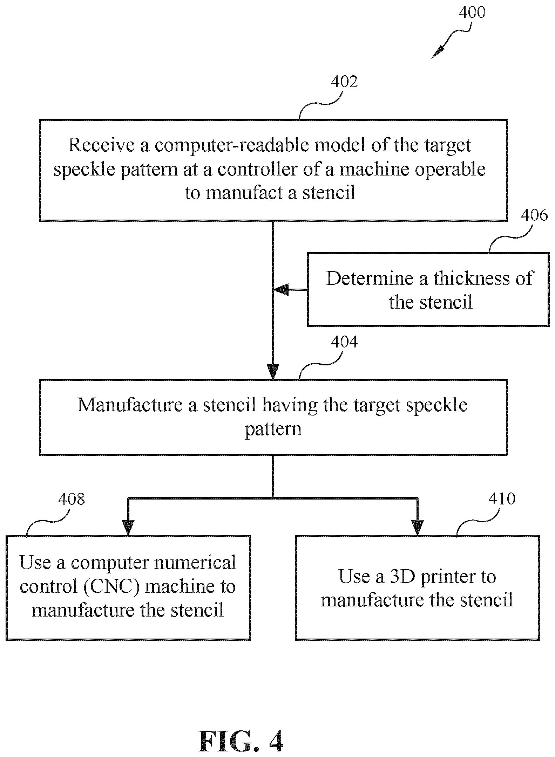

According to the disclosed embodiments, step 318 may be omitted in flowchart 300 and may be executed when manufacturing a stencil with the target speckle pattern, as shown in Figure 4.

Figure 4 depicts a flowchart 400 for manufacturing a stencil having the target speckle pattern based on the computer-readable model of target speckle pattern in accordance with the disclosed embodiments. The stencil may be manufactured by a machine that includes a controller capable of receiving a computer-readable model of target speckle pattern.

In flowchart 400, step 402 executes by receiving the computer-readable model of the target speckle pattern generated from flowchart 300 of Figure 3 at the controller of the machine operable to manufacturing the stencil.

Next, step 404 executes by causing the controller to operate the machine to manufacture the digital image correlation stencil based on the target speckle pattern in the computer-readable model.

As mentioned in Figure 3, flowchart 400 may also include a step 406 for determining the thickness of the stencil. This step is optional if the thickness of the stencil has been determined and saved in the target speckle pattern database 120 in generating the computer-readable model of the target speckle pattern, as described in Figure 3.

The disclosed embodiments may use a computer numerical control (CNC) machine to manufacture the stencil, as shown at step 408. Alternatively, the disclosed embodiments may also use a three-dimensional printer to manufacture the stencil, as shown at step 410.

When the machine is the CNC machine, step 408 executes by causing the controller to operate the CNC machine to manufacture the DIC stencil by cutting the DIC stencil out of a sticker. The sticker is a vinyl sticker.

If the machine is the three-dimensional printer, step 410 executes by causing the controller to operate the three-dimensional printer to print the DIC stencil in a shape that at least substantially conforms to the one or more surfaces-to-be-analyzed of the object.

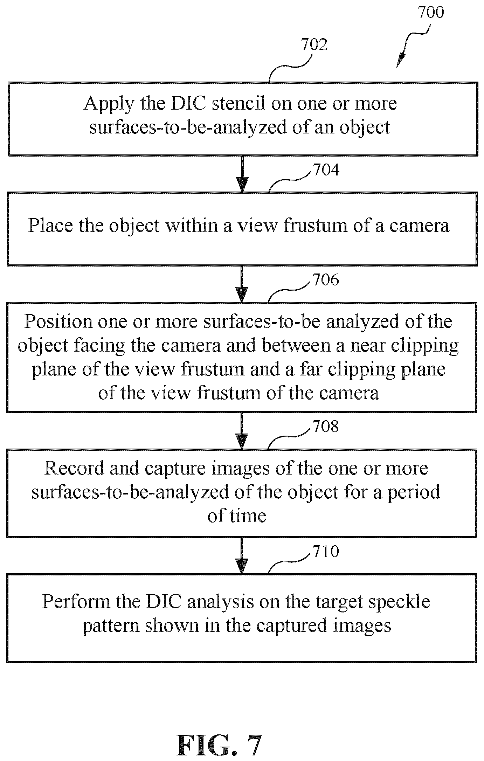

Figure 7 illustrates a flowchart 700 for performing a DIC analysis of an object using a camera in accordance with the disclosed embodiments. The object may be a two-dimensional or a three-dimensional object and one or more surfaces of the object will be DIC-analyzed.

Step 702 executes by applying the stencil manufactured according to the flowchart 400 of Figure 4 that has the target speckle pattern generated from the computer-readable model 200 of Figure 2.

Step 704 executes by positioning the object within a view frustrum of the camera, and step 606 executes by positioning the one or more surfaces-to-be-analyzed facing the camera and between a near clipping plane of the view frustum and a far clipping plane of the view frustum. The view frustum of the camera is determined based on at least one characteristic of the camera stored in the camera parameters database 140. The at least one characteristic includes a capture resolution, a size of an image-capture sensor of the camera, a focal length of a lens of the camera through which light passes before the light is captured by the image-capture sensor, and a distance between the position of the camera and a point on the surface-to-be-analyzed of the three-dimensional model of the object.

Next, step 708 executes by recording or capturing images of the one or more surfaces-to-be-analyzed of the object for a period of time. The period of time is variable based on different situations.

Step 710 then executes by analyzing the DIC of the target speckle patterns shown in the captured images after the period of time. The DIC analysis may include determining the deformation and displacement of the target speckle patterns shown in the captured images, and determining if the object needs a replacement or a repair.

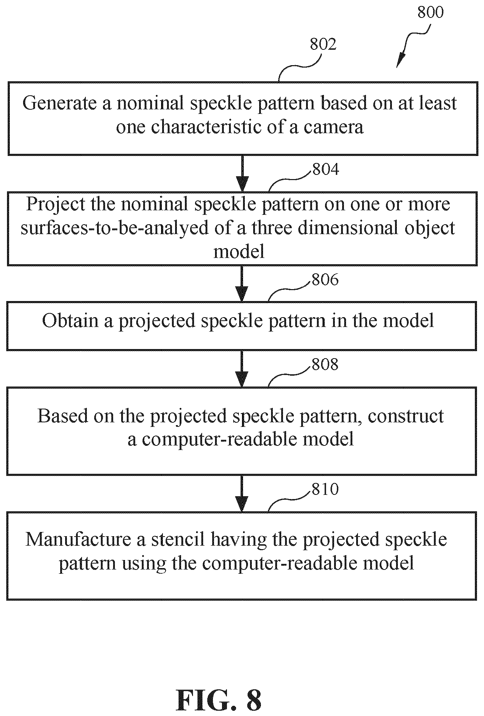

Figure 8 illustrates a flowchart 800 for generating a stencil in accordance with another disclosed embodiments. The flowchart 800 of Figure 8 may be performed by a processor, caused by an execution of computer-readable instructions stored in a non-transitory computer-readable storage medium.

Step 802 executes by generating a nominal speckle pattern based on at least one characteristic of a camera used in the DIC analysis. The characteristic of the camera may include any one parameter or combinations of some of the parameters stored in the camera parameter database 140.

Step 804 then executes by projecting the nominal speckle pattern onto a three-dimensional model of one or more surfaces-to-be-analyzed of an object.

Step 806 executes by obtaining a projected speckle pattern on the three-dimensional model.

Step 808 executes by constructing a computer-readable model based on the projected speckle pattern.

Next, step 810 executes by manufacturing a stencil having the projected speckle pattern using the computer-readable model.

In the disclosed embodiments, the computer-readable instructions may further include conversion instructions that, when executed by a computer cause the computer to convert the computer-readable model into instructions executable by a manufacturing machine to manufacture the stencil.

The stencil made by the computer-readable model of target speckle pattern in accordance with the disclosed embodiments facilitates to finely control the speckle pattern formed on object, and as it is custom-made, the size of the dots or features can be created as desired. Further, by using the stencil, the skill of an operator who applies the spray paint becomes less important, as the dot size of the target speckle pattern is finely controlled. Further, the disclosed embodiments provide a maximum contrast in the speckle pattern as there will be no darkening in the background of the pattern by spraying paint through the stencil. Moreover, the target speckle pattern, such as the target 118 of Figure 1, can be applied much faster by the stencil of the disclosed embodiments than a conventional method that manually draw dots with a permanent marker on an object, and the resulting paint is resilient against high temperatures, moisture, and high accelerations. The stencil in accordance with the disclosed embodiments may be two-dimensional or three-dimensional based on the shape and structure of an object needed for an DIC analysis. A three-dimensional stencil may be made using a three-dimensional printing process. Flexible material such as TPU (Thermoplastic Polyurethane) may be used to print the stencil so that the stencil made of such flexible thermoplastic material can be easily applied on curved surfaces.

It is noted that the nominal speckle pattern 114 and three-dimensional object model 116 generated from CAD file 132 in Figure 1 may be virtual images shown on a computer screen. Further, the projection of the nominal speckle pattern 114 to the three-dimensional object model 116 may also be performed in a virtual reality environment. Here, "virtual" nominal speckle pattern 114 and "virtual" three-dimensional object model 116 may mean "simulated" virtual speckle pattern and "simulated" object or part created by a computer and they are interacted in a virtual reality environment. Virtual ideal speckle pattern 114 and virtual three-dimensional object model 116 may also be executed by an artificial intelligent (AI) module or a computer software. In this case, system 100 of Figure 1 may include a memory that stores medium-readable instructions, that when executed, causes processor 104 to execute operations as described. Alternatively, the disclosed embodiments may also use a physical projector to project a physical ideal speckle pattern on a physical object, or use a physical projector to project a virtual ideal speckle pattern on a virtual physical object or a physical object. There are no limits with this regard.

As will be appreciated by one skilled in the art, the present invention may be embodied as a system, method or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non- exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer- usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within their scope.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing than the appended claims, in which reference to an element is the singular is not intended to mean "one and only one" unless explicitly so stated, but rather "one or more". Moreover, wherein a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of the invention as defined by the claims. Accordingly, the description is not intended to be exhaustive or to limit the principles described or illustrated herein to any precise form. Many modifications and variations are possible in light of the above teaching.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the scope of the appended claims.

## Claims

1. A method of constructing a computer-readable model of a target speckle pattern to be used in manufacturing a stencil (150) to be applied to an object for a digital image correlation (DIC) analysis using a camera (112), the method comprising:
defining a position of the camera (112) to be used for the DIC analysis relative to a three-dimensional model of the object (116);
determining a view frustum (210) of the camera based on the position of the camera (112) such that a surface-to-be-analyzed (126, 128) of the three-dimensional model of the object (116) is positioned within the view frustum (210) and facing the position of the camera (112);
receiving a nominal speckle pattern (114) defined for the DIC analysis based on a capture resolution of the camera (112);
positioning the nominal speckle pattern (114) within the view frustum (210) on a plane (228) that is normal to a construction line (226) passing through the view frustum (210) such that the view frustum (210) is symmetrical in two degrees of freedom relative to the construction line (226);
projecting the nominal speckle pattern (114) onto the surface-to-be-analyzed (126, 128) of the three-dimensional model of the object (116) and thereby constructing a target speckle pattern (118); and
saving the target speckle pattern (118) into a non-transitory computer memory of a computer-readable model of the target speckle pattern (200), wherein the computer-readable model of the target speckle pattern (200) is configured to be used in manufacturing the stencil (150) to be applied to the object for the DIC analysis using the camera (112).

2. The method of claim 1, further comprising positioning the three-dimensional model of the object (116) between a near clipping plane (212) of the view frustum (210) and a far clipping plane (214) of the view frustum (210).

3. The method of claim 2, wherein the plane (228) is between the near clipping plane (212) of the view frustum (210) and the far clipping plane (214) of the view frustum (210).

4. The method of any preceding claim, further comprising unwrapping the target speckle pattern (118) into a plane that is different from the plane (228) that is normal to the construction line (226) passing through the view frustum (210) and then defining a thickness of the stencil with the target speckle pattern (118).

5. The method of claim 1, 2 or 3, further comprising defining a thickness of the stencil with the target speckle pattern (118).

6. The method of any preceding claim, wherein:
the determining the view frustum (210) of the camera is further based on a characteristic of the camera (112); and, optionally,
the characteristic of the camera includes at least one of:
a size of an image-capture sensor of the camera (112), and a focal length of a lens of the camera (112) through which light passes before the light is captured by the image-capture sensor; and/or
a distance between the position of the camera (112) and a point on the surface-to-be-analyzed (126, 128) of the three-dimensional model of the object (116).

7. The method of any preceding claim, wherein at least one of the defining the position, the determining the view frustum, the receiving the nominal speckle pattern, the positioning the nominal speckle pattern, and the projecting the nominal speckle pattern are performed on a computer in a digital space.

8. A method of manufacturing a digital image correlation stencil, comprising:
receiving, at a controller of a machine operable to manufacture a digital image correlation stencil (150), the computer-readable model of the target speckle pattern (200) of any of claims 1 to 7;
causing the controller to operate the machine to manufacture the digital image correlation stencil (150) based on the target speckle pattern (118) in the computer-readable model.

9. The method of claim 8, wherein the machine includes at least one of a computer numerical control (CNC) machine, and a three-dimensional printer.

10. The method of claim 9, wherein:
the machine comprises the CNC machine; and
the causing the controller to operate the machine to manufacture the digital image correlation stencil (150) includes causing the CNC machine to cut the digital image correlation stencil out of a sticker; and, optionally,
the sticker comprises vinyl.

11. The method of claim 9 or 10, wherein:
the machine comprises the three-dimensional printer; and
the causing the controller to operate the machine to manufacture the digital image correlation stencil (150) includes causing the three-dimensional printer to print the digital image correlation stencil in a shape that at least substantially conforms to the surface-to-be-analyzed of the object (126, 128).

12. A method of manufacturing a stencil (150), comprising:
at a controller, reading the target speckle pattern (118) of any of claims 1 to 7; and
at the controller, executing a manufacturing process to manufacture the stencil (150) based on the target speckle pattern (118),
wherein, optionally, the manufacturing process includes at least one of additive manufacturing and CNC machining.

13. A non-transitory computer-readable storage medium having computer-readable instructions stored thereon, which when executed by a computer causes the computer to perform a stencil generating procedure, the procedure comprising:
constructing a nominal speckle pattern (114) based on a capture resolution of a camera (112) to be used in a digital image correlation (DIC) analysis of an object, wherein a surface (126, 128) of the object is speckled using the stencil (150);
projecting the nominal speckle pattern (114) onto a model (116) of the surface (126, 128) of the object to construct a projected speckle pattern (162, 164, 166) in the model (116); and
based on the projected speckle pattern, constructing a computer-readable model (200) to be used to manufacture the stencil (150).

14. The non-transitory computer-readable storage medium of claim 13, wherein:
the computer-readable instructions include conversion instructions that, when executed by the computer cause the computer to convert the computer-readable model into instructions executable by a manufacturing machine to manufacture the stencil (150); and, optionally
the manufacturing machine comprises at least one of:
a computer numerical control (CNC) machine; and
a three-dimensional printer.

15. The method or non-transitory computer-readable storage medium of any preceding claim, wherein the stencil (150) comprises a thermoplastic material.
